(19) Europäisches Patentamt
European Patent Office
Office européen des brevets

(11) **EP 4 597 039 A1**

(12) **EUROPÄISCHE PATENTANMELDUNG**

(43) Veröffentlichungstag:
**06.08.2025 Patentblatt 2025/32**

(21) Anmeldenummer: **24154703.3**

(22) Anmeldetag: **30.01.2024**

(51) Internationale Patentklassifikation (IPC):
**G01D 3/08** (2006.01)   **G01D 18/00** (2006.01)
**G01D 21/00** (2006.01)

(52) Gemeinsame Patentklassifikation (CPC):
**G01D 18/00; G01D 3/08; G01D 21/00;**
G01D 2218/10

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Innomotics GmbH**
**90441 Nürnberg (DE)**

(72) Erfinder:
• **Horcher, Daniel**
  **96103 Hallstadt (DE)**
• **Krauleidis, Peter**
  **97792 Riedenberg (DE)**
• **Strobel, Samuel**
  **91052 Erlangen (DE)**

(74) Vertreter: **Siemens Patent Attorneys**
**Postfach 22 16 34**
**80506 München (DE)**

(54) **VERFAHREN ZUM BESTIMMEN EINER ANWENDBARKEIT EINER MESSEINRICHTUNG FÜR EIN MASCHINENSYSTEM MITTELS EINER ELEKTRONISCHEN RECHENEINRICHTUNG, COMPUTERPROGRAMMPRODUKT, COMPUTERLESBARES SPEICHERMEDIUM SOWIE ELEKTRONISCHE RECHENEINRICHTUNG**

(57)    Die Erfindung betrifft ein Verfahren zum Bestimmen einer Anwendbarkeit einer Messeinrichtung (26) für ein Maschinensystem (20) mittels einer elektronischen Recheneinrichtung (10), mit den Schritten: Bereitstellen eines digitalen Referenzmodells (12) für eine Referenzmesseinrichtung (14) eines Referenzmaschinensystems (16) mittels der elektronischen Recheneinrichtung (10); Vorgeben eines digitalen Modells (18) des Maschinensystems (20) mittels der elektronischen Recheneinrichtung (10); Vorgeben eines einzuhaltenden Genauigkeitswerts (22) für die Messeinrichtung (26) mittels der elektronischen Recheneinrichtung (10); Bestimmen eines Genauigkeitswerts (24) für das digitale Modell (18) in Abhängigkeit von dem digitalen Referenzmodell (12) mittels der elektronischen Recheneinrichtung (10); und Bestimmen der Anwendbarkeit der Messeinrichtung (26) in Abhängigkeit von dem vorgegebenen Genauigkeitswert (22) und dem bestimmten Genauigkeitswert (24) mittels der elektronischen Recheneinrichtung (10).

Ferner betrifft die Erfindung ein Computerprogrammprodukt, ein computerlesbares Speichermedium sowie eine elektronische Recheneinrichtung (10).

FIG 1

EP 4 597 039 A1

**Beschreibung**

Die Erfindung betrifft ein Verfahren zum Bestimmen einer Anwendbarkeit einer Messeinrichtung für ein Maschinensystem mittels einer elektronischen Recheneinrichtung gemäß dem geltenden Patentanspruch 1. Ferner betrifft die Erfindung ein entsprechendes Computerprogrammprodukt, ein entsprechendes computerlesbares Speichermedium sowie eine entsprechende elektronische Recheneinrichtung.

Zur diagnostischen Überwachung von beispielsweise rotierenden Komponenten, beispielsweise von Motoren, Getrieben oder Pumpen in Zügen, Kraftwerken oder Kläranlagen, ist ein Parametrisieren einer Analysefunktion erforderlich, sodass das eingesetzte Sensorsystem den Zustand der Komponente mit hoher Genauigkeit und Präzision erfassen und wiedergeben kann. Für das Parametrisieren sind detaillierte Informationen, zum Beispiel Lagertyp, Anzahl der Kugeln, Anzahl der Zähne am Zahnrad oder dergleichen erforderlich, die heute nur bedingt digital vorhanden sind. Meist existieren Datenblätter, die Informationen über das Produkt liefern. Anhand dieser Informationen werden die Algorithmen und Auswerteverfahren lokal parametrisiert, zum Beispiel theoretische Berechnung der Überrollfrequenz beim Lager, Setzen eines digitalen Filters und eines zu überwachenden Schwellwertes. Für das Überwachen einzelner Komponenten ist der Aufwand überschaubar. Aus Sicht von Anlagenbetreibern und den Herstellern der Komponenten ist es eine unüberwindbare Herausforderung, alle Systeme für eine genaue und präzise Zustandsdiagnose zu parametrisieren.

Ein unterstützendes, digitales Abbild der Produkte inklusive aller Subkomponenten existiert nicht über die gesamte Produktvarianz, beispielsweise über 30.000 Varianten von Getriebemotoren mit unterschiedlichen Kupplungen, Lagertypen, Passfedern, Motorgehäusemasse und damit Steifigkeit, Materialparameter, Betriebsparameter wie beispielsweise Drehzahl oder Last. Dies führt dazu, dass nicht alle Komponenten und deren Zustände diagnostisch überwacht werden können, da hierzu eine genaue und präzise Erfassung der Messgröße erforderlich ist.

Zur Überwachung existieren bereits Sensorsysteme, die häufig für ein spezielles Produkt oder eine Produktgruppe, beispielsweise mit niedriger Variantenzahl, parametrisiert wurden. Das heißt, spezielle Frequenzbänder oder Kennwertverfahren werden für die zu überwachende Komponente ausgewählt, zum Beispiel eine Ausprägung für ein erstes Rührwerk und eine Ausprägung für ein zweites Rührwerk. Die Parametrisierung und Verifizierung der parametrisierten Verfahren mittels Systemprüfstand, insbesondere für wenige Stichproben, erfolgt dabei durch Personen beziehungsweise manuell. Des Weiteren können die einzelnen Komponenten auch mittels eines datengetriebenen Ansatzes überwacht werden. Das heißt, es wird der Status Quo erfasst und dann eine Abweichung vom installierten Zustand - idealerweise vom Gesundzustand - detektiert, die sogenannte Anomalieerkennung. Ist der Gesundzustand nicht bekannt, wird ein relativer Vergleich mit Schwestermaschinen durchgeführt. Eine absolute Aussage des Zustands ist nicht möglich. Weiterhin besteht die Möglichkeit, die Algorithmen mittels eines Lernprozesses anzutrainieren. Hierbei ist jedoch ein großer Trainingsdatensatz des Gesundzustands und des Fehlerzustands erforderlich, was durch die hohe Anzahl der Produktvarianten nicht möglich ist. Das heißt, es existieren nur Systeme, die sich auf die wahrscheinlichsten auftretenden Fehlerszenarien konzentrieren. Ferner messen beispielsweise die eingesetzten Sensorsysteme lediglich an standardisierten Messpositionen. Die Peripherie oder Materialkennwerte der zu überwachenden Komponenten fließen bei der Bewertung nicht mit ein, lediglich die Leistungsgröße beispielsweise der Motoren oder zum Beispiel Pumpen wird berücksichtigt.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchen bestimmt werden kann, ob eine Messeinrichtung für ein spezifisches Maschinensystem anwendbar ist.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bestimmen einer Anwendbarkeit einer Messeinrichtung für ein Maschinensystem mittels einer elektronischen Recheneinrichtung. Es wird ein digitales Referenzmodell für eine Referenzmesseinrichtung eines Referenzmaschinensystems mittels der elektronischen Recheneinrichtung bereitgestellt. Es wird ein digitales Modell des Maschinensystems mittels der elektronischen Recheneinrichtung vorgegeben. Es erfolgt das Vorgeben eines einzuhaltenden Genauigkeitswerts für die Messeinrichtung mittels der elektronischen Recheneinrichtung. Es wird ein Genauigkeitswert für das digitale Modell in Abhängigkeit von dem digitalen Referenzmodell mittels der elektronischen Recheneinrichtung bestimmt und es erfolgt ein Bestimmen der Anwendbarkeit der Messeinrichtung in Abhängigkeit von dem vorgegeben Genauigkeitswert und von dem bestimmten Genauigkeitswert mittels der elektronischen Recheneinrichtung.

Dadurch ist es ermöglicht, dass überprüft werden kann, ob die Messeinrichtung, welche beispielsweise beim Referenzmaschinensystem eingesetzt wurde, auch für ein vom Referenzmaschinensystem abweichenden Maschinensystem einsetzbar ist.

Insbesondere ermöglicht somit das Verfahren eine entsprechende Messeinrichtung zu parametrisieren, die sowohl für einzelne Installationen eingesetzt werden kann, aber insbesondere auch für eine große Produkt- und Anwendungsvielfalt eine hohe Messgenauigkeit und Präzision besitzt.

Insbesondere kann somit eine datenbasierte Diagnose, ähnlich wie zum Beispiel in der Maschinennorm DIN ISO 20816 abgebildet, bereitgestellt werden jedoch kann die Messeinrichtung auch an unterschiedlichen Orten des zu überwachenden Maschinensystems befestigt werden, da beispielsweise mittels hinterlegter Transferfunktionen die Übertragung eines Signals, zum Beispiel von Körperschall, von der Schadensposition zur Messposition in dem Diagnosesignal berücksichtigt wird. Dadurch ist eine absolute Aussage über den Schaden und damit eine Vorhersage der Restlebensdauer möglich. Mit standardisierten Lösungen kann die Restlebensdauer nur mit höherer Ungenauigkeit vorhergesagt werden.

Ferner kann das in einer Datenbank hinterlegte digitale Abbild einzelner Komponenten darüber hinaus den Vorteil bieten, dass auch eine hohe Produkt- und Anwendungsvielfalt berücksichtigt wird. Jede Unsicherheit der einzelnen Parameter wird berücksichtigt und dadurch kann die Gesamtunsicherheit des Sensorsystems beziehungsweise der Messeinrichtung mit hoher Präzision berechnet werden.

Mit anderen Worten ist vorgesehen, dass anhand eines Referenzmaschinensystems einer Referenzmesseinrichtung eine entsprechende Unsicherheit beziehungsweise Messungenauigkeit für das spezifische Maschinensystem vorhergesagt werden kann. Auf Basis eines tatsächlich einzusetzenden Maschinensystems wird nun überprüft, ob das Sensorsystem beziehungsweise die Messeinrichtung für das Referenzmaschinensystem auch bei dem tatsächlichen Maschinensystem anwendbar ist. Hierzu ist insbesondere vorgesehen, dass ein digitales Modell für das Maschinensystem erstellt wird und eine Messungenauigkeit beziehungsweise ein Genauigkeitswert für die Messeinrichtung in Abhängigkeit von dem vorgegebenen Maschinensystem erzeugt wird. Hierzu können beispielsweise entsprechende Unterschiede zwischen dem Maschinensystem und dem Referenzmaschinensystem bestimmt werden, und auf Basis dessen dann wiederum die Messeinrichtung simuliert werden. Sollte beispielsweise die Messgenauigkeit einen Schwellwert überschreiten, so kann davon ausgegangen werden, dass die Messeinrichtung nicht für das Maschinensystem geeignet ist. Es kann dann beispielsweise vorgesehen sein, dass ein entsprechendes Warnsignal erzeugt wird, sodass ein Nutzer in Kenntnis darüber gesetzt ist, dass die Messeinrichtung nicht anwendbar für das Maschinensystem ist. Hierzu kann beispielsweise ferner ein Steuersignal erzeugt werden, um beispielsweise ein neues Referenzmodell zu nutzen beziehungsweise zu erstellen, sodass ein neuer Vergleich durchgeführt werden kann. Beispielsweise kann dann vorgesehen sein, dass in Abhängigkeit von dem Vergleich eine Suche eines weiteren Referenzmodells beziehungsweise einer weiteren Messeinrichtung durchgeführt wird, welche es ermöglicht, dass innerhalb des vorgegebenen Genauigkeitswerts die Messeinrichtung entsprechend anwendbar ist.

Beispielsweise kann vorgesehen sein, dass bei einer Nichtanwendbarkeit ein Steuersignal zur Erzeugung eines neuen Referenzmodells unter Berücksichtigung einer neuen Messeinrichtung durchgeführt wird.

Gemäß einer vorteilhaften Ausgestaltungsform ist vorgesehen, dass zumindest ein Parameter für das Maschinensystem vorgegeben wird und das digitale Referenzmodell in Abhängigkeit von dem Parameter zum digitalen Modell adaptiert wird. Beispielsweise kann verglichen werden, dass im Referenzmodell eine Maschine mit einer ersten Leistung vorgesehen ist, während im Maschinensystem eine andere Maschine mit einer zweiten Leistung vorgesehen ist. In diesem Fall bildet die Leistung den Parameter. Es kann nun das Referenzmodell entsprechend in Abhängigkeit von diesem Parameter angepasst werden. Somit kann das Referenzmodell zu dem digitalen Modell angepasst werden, indem eine entsprechende Adaptionen der Leistung der Maschine durchgeführt wird. Somit kann entsprechend das Referenzmodell mit dem digitalen Modell verglichen werden. Es kann nun überprüft werden, ob dann wiederum die Messeinrichtung dazu geeignet ist, innerhalb der Genauigkeitsvorgabe eine entsprechende Messung durchführen zu können.

Weiterhin vorteilhaft ist, wenn zum Bestimmen des Genauigkeitswerts eine Schadensart einer jeweiligen Komponente des Maschinensystems berücksichtigt wird. Hierzu kann beispielsweise ein entsprechendes Schadenssignal erzeugt werden. Dies kann beispielsweise auf Basis von messtechnischen Untersuchungen an Prüfständen, die Übernahme von Messergebnissen aus vorherigen Schadensszenarien oder durch mathematische Beschreibung des Schadens und ableitender Unsicherheiten in Bezug auf Komponenten durchgeführt werden. Mit anderen Worten kann innerhalb des digitalen Modells ein Gesundzustand bereitgestellt werden. Ferner können unterschiedliche Schadenssignale für unterschiedliche Komponenten bereitgestellt werden. Auf Basis dieser unterschiedlichen Schadenssignale kann nun zuverlässig der Genauigkeitswert bestimmt werden.

Eine weitere vorteilhafte Ausgestaltungsform sieht vor, dass zum Bestimmen des Genauigkeitswerts eine Positionierung der Messeinrichtung relativ zu einer jeweiligen Komponente des Maschinensystems berücksichtigt wird. Beispielsweise kann berücksichtigt werden, ob die Messeinrichtung an einem Gehäuse eines Motors oder aber an einem benachbarten Gehäuse angeordnet ist. Insbesondere können somit unterschiedliche Körperschallsignale unterschiedlich erfasst werden. Somit ist es ermöglicht, dass auf Basis unterschiedlicher Positionierungen dennoch zuverlässig bestimmt werden kann, ob die Messeinrichtung einsetzbar ist.

Dabei kann insbesondere vorgesehen sein, dass eine Transferfunktion von der Komponente zur Messeinrichtung bestimmt wird. Insbesondere zur Bestimmung der Transferfunktion kann beispielsweise eine Modalanalyse und eine Auswertung der Transferfunktion zwischen der Schadensquelle und der Messposition, insbesondere innerhalb des Referenzmaschinensystems, durchgeführt werden. Es kann dann auch eine Simulation der Transferfunktion mittels Multiphysik-Software durchgeführt werden. Eine Parametrisierung des Simulationsmodells anhand der Informationen über Masse, Steifigkeiten, Dämpfungen, Geometrien kann ebenfalls zum Bestimmen der Transferfunktion durchgeführt werden.

Ferner hat es sich als vorteilhaft erwiesen, wenn eine Peripherie des Maschinensystems bei dem Bestimmen des Genauigkeitswerts berücksichtigt wird. Hierzu kann beispielsweise vorgesehen sein, dass von Schwesterinstallationen die Informationen entsprechend herangezogen werden, und ein Übertragen der Messdaten auf die Zielinstallation durchgeführt wird. Hierbei kann ferner eine Durchführung einer Modalanalyse und die Auswertung der Transferfunktion zwischen den Komponenten und der Peripherie, insbesondere dem Referenzmaschinensystem, realisiert werden. Des Weiteren kann ein Einsatz zum Beispiel definierter Fundamente und die Übernahme der Einflussfaktoren aus einer Typmessung, beispielsweise die Vermessung des definierten Fundamentes und die Übernahme der messtechnischen Eigenschaften für das digitale Abbild, durchgeführt werden.

Ebenfalls vorteilhaft ist, wenn bei einer Bestimmung einer Nicht-Anwendbarkeit der Messeinrichtung eine Warnmeldung erzeugt wird. Beispielsweise kann die Warnmeldung auf einer Ausgabeeinrichtung, beispielsweise einem Bildschirm, der elektronischen Recheneinrichtung ausgegeben werden. Somit kann ein Nutzer, welcher die Anwendbarkeit entsprechend bestimmen möchte, darüber in Kenntnis gesetzt werden, dass die Messeinrichtung nicht anwendbar ist, und beispielsweise eine weitere Anwendbarkeitsanalyse durchführen. Somit kann verhindert werden, dass Messeinrichtungen, welche nicht anwendbar sind, entsprechend für das Maschinensystem eingesetzt werden.

Ebenfalls vorteilhaft ist, wenn bei einer Bestimmung einer Nicht-Anwendbarkeit der Messeinrichtung eine geeignete Messeinrichtung vorgeschlagen wird. Beispielsweise kann dann automatisiert die geeignete Messeinrichtung gesucht werden. Insbesondere können mehrere iterative Suchvorgänge durchgeführt werden, bis eine geeignete Messeinrichtung gefunden ist. Somit kann eine geeignete Messeinrichtung für das Maschinensystem automatisiert gefunden werden.

Es hat sich weiterhin als vorteilhaft erwiesen, wenn bei einer Bestimmung einer Nicht-Anwendbarkeit der Messeinrichtung ein anderes Referenzmodell vorgeschlagen wird. Beispielsweise kann auch das Referenzmodell entsprechend unpassend für das Maschinensystem sein. Es kann dann vorgesehen sein, dass beispielsweise innerhalb einer Datenbank eine Vielzahl von digitalen Referenzmodellen zur Verfügung gestellt wird. Bei einer Nicht-Anwendbarkeit können nun die unterschiedlichen digitalen Referenzmodelle mit den unterschiedlichen Messeinrichtungen zuverlässig durchsimuliert werden, bis ein digitales Referenzmodell entsprechend gefunden wird, welches geeignet ist, um die Anwendbarkeit zu prüfen.

Eine weitere vorteilhafte Ausgestaltungsform sieht vor, dass das digitale Referenzmodell auf Basis einer Komponentenliste des Maschinensystems vorgegeben wird. Beispielsweise kann das Maschinensystem unterschiedliche Komponenten aufweisen. Die Komponentenliste weist dabei im Wesentlichen jede Einzelkomponente für das Maschinensystem auf. Das digitale Referenzmodell wird dann auf Basis der Komponentenliste entsprechend ausgesucht und vorgegeben. Somit kann hoch zuverlässig ein digitales Referenzmodell bereitgestellt werden, auf Basis dessen zuverlässig wiederum bestimmt werden kann, ob eine entsprechende Messeinrichtung anwendbar ist.

Dabei kann weiterhin vorgesehen sein, dass physikalische Eigenschaften und/oder chemische Eigenschaften und/oder thermische Eigenschaften in der Komponentenliste berücksichtigt werden. Insbesondere sind die entsprechenden Eigenschaften in der Komponentenliste hinterlegt. Somit können die unterschiedlichen Eigenschaften der Komponenten ebenfalls mit berücksichtigt werden und somit zuverlässig bestimmt werden, ob die Messeinrichtung anwendbar ist oder nicht.

Ebenfalls vorteilhaft ist, wenn der einzuhaltende Genauigkeitswert durch Erfassen einer Eingabe einer Person vorgegeben wird. Beispielsweise kann ein Endnutzer einen entsprechenden Genauigkeitswert vorgeben. Eine Person kann dann über eine Eingabeeinrichtung an der elektronischen Recheneinrichtung den entsprechenden Genauigkeitswert eingeben, beispielsweise ist eine Genauigkeit von mindestens 95 Prozent gewünscht. Es ist nun vorgesehen, dass eine Simulation durchgeführt wird, ob die Messeinrichtung den Genauigkeitswert von 95 Prozent einhalten kann. Sollte der Genauigkeitswert eingehalten werden, so kann die entsprechende Messeinrichtung für das Maschinensystem bereitgestellt werden. Sollte der Genauigkeitswert beispielsweise nicht eingehalten werden, so kann eine neue Messeinrichtung bereitgestellt werden beziehungsweise ein neues Referenzmodell genutzt werden, sodass zuverlässig der einzuhaltende Genauigkeitswert auch eingehalten wird.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ein nochmals weiterer Aspekt der Erfindung betrifft daher auch ein computerlesbares Speichermedium mit zumindest einem Computerprogrammprodukt nach dem vorhergehenden Aspekt.

Ferner betrifft die Erfindung auch eine elektronische Recheneinrichtung zum Bestimmen einer Anwendbarkeit einer Messeinrichtung für ein Maschinensystem, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Vorteilhafte Ausgestaltungsformen des Verfahrens sind als vorteilhafte Ausgestaltungsformen des Computerprogrammprodukts, des computerlesbaren Speichermediums sowie der elektronischen Recheneinrichtung anzusehen. Die elektronische Recheneinrichtung weist hierzu insbesondere gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:

FIG 1     ein schematisches Blockschaltbild gemäß einer Ausführungsform des Verfahrens; und

FIG 2     ein schematisches Diagramm gemäß einer Ausführungsform des Verfahrens.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

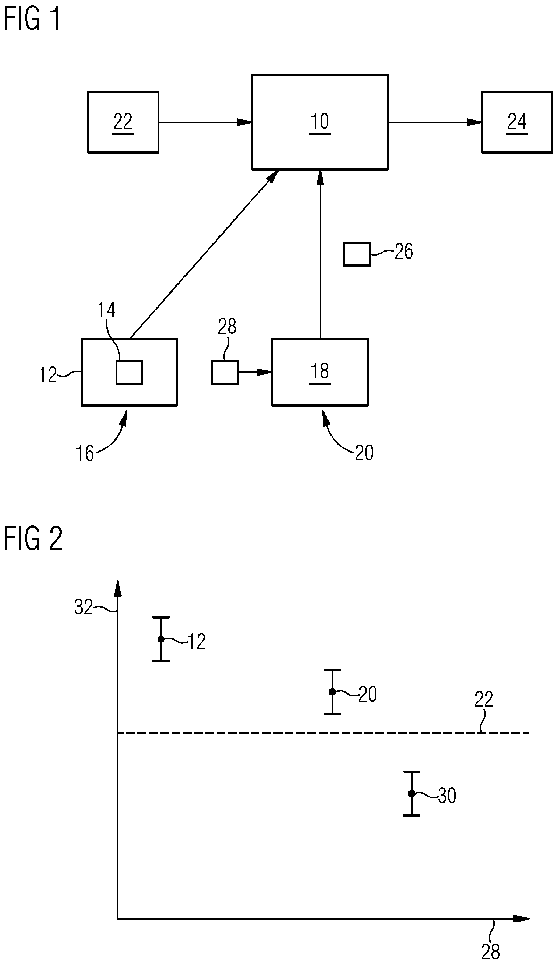

FIG 1 zeigt ein schematisches Blockschaltbild gemäß einer Ausführungsform einer elektronischen Recheneinrichtung 10 zum Durchführen eines entsprechenden Verfahrens.

Im vorliegenden Ausführungsbeispiel ist ein digitales Referenzmodell 12 für eine Referenzmesseinrichtung 14 eines Referenzmaschinensystems 16 gezeigt. Ferner ist ein digitales Modell 18 eines Maschinensystems 20 gezeigt. Weiterhin ist ein einzuhaltender Genauigkeitswert 22 gezeigt. Des Weiteren wird ein zu bestimmender Genauigkeitswert 24 gezeigt. Die Messeinrichtungen können dabei beispielsweise einen oder mehrerer Sensoren aufweisen.

Insbesondere zeigt die FIG 1 somit eine Ausführungsform zum Verfahren zum Bestimmen einer Anwendbarkeit einer Messeinrichtung für das Maschinensystem 20 mittels der elektronischen Recheneinrichtung 10. Es wird das digitale Referenzmodell 12 für die Referenzmesseinrichtung 14 des Referenzmaschinensystems 16 bereitgestellt. Es wird das digitale Modell 18 des Maschinensystems 20 vorgegeben. Es erfolgt das Vorgeben des einzuhaltenden Genauigkeitswerts 22 für die Messeinrichtung 26 mittels der elektronischen Recheneinrichtung 10. Es wird der Genauigkeitswert 24 für das digitale Modell 18 in Abhängigkeit von dem digitalen Referenzmodell 12 mittels der elektronischen Recheneinrichtung 10 bestimmt und es erfolgt ein Bestimmen der Anwendbarkeit der Messeinrichtung 26 in Abhängigkeit von dem vorgegebenen Genauigkeitswert 22 und dem bestimmten Genauigkeitswert 24 mittels der elektronischen Recheneinrichtung 10.

Dabei kann insbesondere vorgesehen sein, dass zumindest ein Parameter 28 für das Maschinensystem 18 vorgegeben wird und das digitale Referenzmodell 12 in Abhängigkeit von dem Parameter 28 zum digitalen Modell 18 adaptiert wird.

Ferner kann vorgesehen sein, dass zum Bestimmen des Genauigkeitswerts 24 eine Schadensart einer jeweiligen Komponente des Maschinensystems 18 berücksichtigt wird. Ferner kann zum Bestimmen des Genauigkeitswerts 24 eine Positionierung der Messeinrichtung 26 relativ zu einer jeweiligen Komponente des Maschinensystems 18 berücksichtigt werden. Des Weiteren kann vorgesehen sein, dass hierzu eine Transferfunktion von der Komponente zur Messeinrichtung 26 bestimmt wird. Ferner kann eine Peripherie des Maschinensystems 18 beim Bestimmen des Genauigkeitswerts 24 berücksichtigt werden.

Ebenfalls kann vorgesehen sein, dass bei einer Bestimmung einer Nicht-Anwendbarkeit der Messeinrichtung 26 eine Warnmeldung erzeugt wird. Des Weiteren kann bei einer Bestimmung einer Nicht-Anwendbarkeit der Messeinrichtung 26 eine geeignete Messeinrichtung vorgeschlagen werden. Ferner kann bei einer Bestimmung einer Nicht-Anwendbarkeit der Messeinrichtung 26 ein anderes digitales Referenzmodell vorgeschlagen werden.

Ebenfalls kann vorgesehen sein, dass das digitale Referenzmodell 12 auf Basis einer Komponentenliste des Maschinensystems 18 vorgegeben wird. Ferner können dabei physikalische Eigenschaften und/oder chemische Eigenschaften und/oder thermische Eigenschaften in der Komponentenliste berücksichtigt werden.

Insbesondere zeigt somit die FIG 1 die elektronische Recheneinrichtung 10, welche derart parametrisiert werden kann, dass sowohl für Einzelinstallationen die Messeinrichtung 26 eingesetzt werden kann, aber insbesondere auch für eine große Produkt- und Anwendungsvielfalt eine hohe Messgenauigkeit und -präzision bereitgestellt werden kann.

Dabei ist insbesondere vorgesehen, dass eine digitale Abbildung der Systemkomponenten des Maschinensystems 18 inklusive aller Unterkomponenten und die Hinterlegung wichtiger Informationen für die Diagnose, beispielsweise Art der Komponenten, zum Beispiel Lager oder Welle, Aufbau der Komponenten, Material, thermische Eigenschaften, Version der Komponenten, Hersteller und Charge oder dergleichen bekannt ist. Jedes Maschinensystem 18 ist dabei eindeutig identifizierbar, beispielsweise über eine entsprechende Seriennummer. Durch Einlesen, beispielsweise via Scan oder manuell, werden die in der digitalen Abbildung hinterlegten Informationen ausgelesen. Anhand dieser Informationen werden standardisierte Verfahren wie die Fourier- oder Hüllkurvenanalyse automatisch parametrisiert. Diese Verfahren werden dann zur Zustandsdiagnose verwendet und zeigen das Ergebnis ähnlich der Maschinennorm DIN ISO 20816 an.

Das digitale Abbild der Systemkomponenten inklusive aller Unterkomponenten sowie den Informationen bezüglich Aufbau, Material oder dergleichen wird anhand eines Referenzmaschinensystems 12, zum Beispiel einer ausgewählten Motor- mit Getriebe- und Peripherie-Kombination, initial aufgebaut und mittels einer geeigneten Simulationsumgebung simuliert. Die Ergebnisse der Simulation, zum Beispiel die Transferfunktion zwischen einem Ort A und einem Ort B, werden mittels Messtechnik an einem realen Aufbau, der dem Referenzsystem entspricht, validiert und verifiziert.

Wird eine Messeinrichtung zur Überwachung des Referenzmaschinensystems 12 eingesetzt, so setzt sich dessen Genauigkeit aus der Richtigkeit und der Präzision der einzelnen Informationen des Referenzsystems und des Sensorsystems zusammen. Die Richtigkeit wird durch den systematischen Fehler, das heißt der Abweichung des Mittelwertes (7) zum wahren Wert beeinflusst. Zufällige Fehler beeinflussen diese Präzision ($\Delta y$). Je geringer die Streuung der Messdaten um den Mittelwert ist, desto größer ist die Präzision der Sensorinformation. Die Genauigkeit der Sensorinformation kann dann wie folgt beschrieben werden:

$$Y = \bar{Y} + \Delta y$$

Beispielhafte Parameter, die zur systematischen oder zufälligen Unsicherheit der Sensorinformation beitragen, ist beispielsweise die Generierung des Körperschallsignals einer zu untersuchenden Komponente, die Transferfunktion, das heißt Übertragungswegsignalursprung und Messoption, die Signalverarbeitung, die Peripherie und Befestigung des Sensors, Systemgrenzen und Umgebungsbedingungen sowie die Referenzmesstechnik.

Die Systemparameter der Messeinrichtung 26 sowie die Parameter der Signalverarbeitung, als auch die Unsicherheit der Referenzmesstechnik können im Rahmen der Entwicklung ermittelt und anhand einer Analyse des Messunsicherheitsbudgets, gemäß beispielsweise Guide for Uncertainty Measurement, bestimmt werden. Die beizutragenden Unsicherheiten können beispielsweise mittels Kalibrierung, Angabe von Unsicherheiten von Datenblättern oder Kalibrierscheinen bestimmt werden.

Die zusätzlichen Unsicherheiten, die durch die Produkt- und Anwendungsvielfalt der zu überwachenden Komponenten entsteht, sind beispielsweise der Einfluss des Schadenssignals der fehlerhaften Komponente beziehungsweise der Teilkomponente auf das Sensorsignal. Beispielsweise wird sich ein Lagerschaden zunächst schwingungstechnisch bemerkbar machen, zu einem späteren Zeitpunkt auch thermisch. Dies kann Einfluss auf die Genauigkeit der Messeinrichtung 26 haben. Ferner ist auch die Transferfunktion zwischen der Schadensquelle und der Messposition, zum Beispiel Motormasse und -steifigkeiten können das Übertragungsverhalten beeinflussen und dadurch das eigentliche Schadenssignal verstärken oder abschwächen. Hieraus resultiert dann eine falsch wahrgenommene Schwinggeschwindigkeit oder -beschleunigung als Schwingungsantwort des Systems. Ferner kann auch die Peripherie dazu beitragen, Unsicherheiten zu erzeugen, das heißt der Einsatzbereich der Komponenten. Beispielsweise kann die harte oder weiche Kopplung der Komponenten an dem Fundament die Vibrationssignale beeinflussen.

Die Unsicherheiten und die mathematische Beschreibung jeder Subkomponente des Referenzsystems beziehungsweise des Referenzmaschinensystems 12, kategorisiert nach Typ, sind in einer Datenbank hinterlegt. Ebenso sind dort die Parameter zur Kommunikation der systematischen Fehler und die zur Diagnose erforderlichen Parameter der beispielsweise lagerspezifischen Verfahren, zum Beispiel Überrollfrequenzen, hinterlegt. Anhand der eindeutigen Identifikation der zu überwachenden Komponenten werden die hinterlegten Parameter und Funktionen aus der Datenbank ausgelesen und zur Parametrisierung des mathematischen Diagnoseverfahrens herangezogen. Das Sensorsystem gibt den Zustand des Referenzsystems mit einer entsprechenden Genauigkeit wieder.

Wird beispielsweise der Motor des Referenzmaschinensystems 12 durch einen anderen Motor, beispielsweise mit abweichender Masse, ausgetauscht, so ändert sich die erzielte Messgenauigkeit des Sensorsystems/Messeinrichtung 26 in Bezug auf das Referenzmaschinensystem 12. Dies ist beispielsweise in der FIG 2 dargestellt. In der FIG 2 ist einmal das Referenzmaschinensystem 12, ein erstes Maschinensystem 20 und ein zweites Maschinensystem 30 gezeigt. In der FIG 2 ist auf der Abszisse insbesondere die Differenz bezüglich des Parameters 28 gezeigt und auf der Ordinate die entsprechende Genauigkeit 32.

Die FIG 2 zeigt somit eine beispielhafte Visualisierung der Abhängigkeiten der Messunsicherheiten der Messeinrichtungen 26 bei der von dem Referenzmaschinensystem 12 abweichenden Getriebemotormasse. Für das Referenzmaschinensystem 12 ist insbesondere ein sogenannter Fehlerbalken gezeigt, welcher die Unsicherheit des Referenzmaschinensystems 12 zeigt. Dabei bildet der Punkt beispielsweise den Mittelwert der Unsicherheit ab, die beiden Fehlerbalken das gleich verteilte Fehlerband um den Mittelwert, die sogenannte Streuung. Eine Änderung der Masse einer beispielhaften Motor-Getriebe-Peripherie-Anordnung gegenüber dem Referenzmaschinensystem 12 verursacht eine Verringerung der Genauigkeit, wie dies beispielsweise durch das erste Maschinensystem 20 und das zweite Maschinensystem 30 gezeigt ist.

Vorliegend ist insbesondere gezeigt, dass das erste Maschinensystem 20 sich jedoch noch oberhalb des einzuhaltenden Genauigkeitswerts 22 befindet, während sich das zweite Maschinensystem 30 außerhalb dieses Schwellwerts befindet. Somit kann beispielsweise vorgesehen sein, dass die Messeinrichtung 26 für das erste Maschinensystem 20 noch eingesetzt werden kann, während die Messeinrichtung 26 für das zweite Maschinensystem 30 nicht mehr anwendbar ist.

Insbesondere zeigen die in der FIG 2 gezeigten Unsicherheiten die Einsatzmöglichkeit der Messeinrichtung 26 als Diagnosesystem, welches insbesondere von hoher Bedeutung ist, und somit für einen diagnostischen Einsatz entsprechend charakterisiert werden muss. Die Bewertung dieser Unsicherheiten, insbesondere das Schadenssignal, die Transferfunktion sowie die Peripherie, gegenüber dem Referenzmaschinensystem 12, kann durch unterschiedliche Methoden ermittelt werden. Das Schadenssignal kann durch messtechnische Untersuchung an Prüfständen, durch die Übernahme von Messergebnissen aus vorherigen Schadensszenarien sowie durch mathematische Beschreibung des Schadens und Ableiten der Unsicherheiten in Bezug auf die Komponenten bestimmt werden. Die Transferfunktion kann durch die Durchführung einer Modalanalyse und die Auswertung der Transferfunktion zwischen der Schadensquelle und der Messposition, insbesondere im Referenzmaschinensystem 12, bestimmt werden. Ferner kann eine Simulation der Transferfunktion mittels Multiphysik-Software durchgeführt werden. Des Weiteren kann eine Parametrisierung des Simulationsmodells anhand der Informationen über beispielsweise Masse, Steifigkeiten, Dämpfung und Geometrien realisiert werden. Die Unsicherheit bezüglich der Peripherie kann durch Heranziehen von Schwesterinstallationen und das Übertragen der Messdaten auf die Zielinstallation bestimmt werden. Ferner kann eine Durchführung einer Modalanalyse und der Auswertetransferfunktion zwischen den Komponenten und der Peripherie, insbesondere bezüglich des Referenzmaschinensystems 12, durchgeführt werden. Ferner kann der Einsatz zum Beispiel definierter Fundamente und die Übernahme der Einflussfaktoren aus einer Typmessung, beispielsweise die Vermessung eines definierten Fundaments und die Übernahme der messtechnischen Eigenschaften für das digitale Abbild, entsprechend bestimmt werden.

Je nach Anforderung an die Genauigkeit und den Einfluss des jeweiligen Parameters auf die auszuwertenden Größen kann das Referenzmaschinensystem 12 mit dessen Parametern eingesetzt werden. Weicht die Genauigkeit zu stark von dem Referenzmaschinensystem 12 ab, so wird die Ungenauigkeit anhand der oben genannten Methoden neu ermittelt und die daraus ermittelten Größen zur Kompensation der systematischen Fehler für die Parametrisierung des diagnostischen Verfahrens herangezogen.

**Patentansprüche**

1. Verfahren zum Bestimmen einer Anwendbarkeit einer Messeinrichtung (26) für ein Maschinensystem (20) mittels einer elektronischen Recheneinrichtung (10), mit den Schritten:

   - Bereitstellen eines digitalen Referenzmodells (12) für eine Referenzmesseinrichtung (14) eines Referenzmaschinensystems (16) mittels der elektronischen Recheneinrichtung (10);
   - Vorgeben eines digitalen Modells (18) des Maschinensystems (20) mittels der elektronischen Recheneinrichtung (10);
   - Vorgeben eines einzuhaltenden Genauigkeitswerts (22) für die Messeinrichtung (26) mittels der elektronischen Recheneinrichtung (10);
   - Bestimmen eines Genauigkeitswerts (24) für das digitale Modell (18) in Abhängigkeit von dem digitalen Referenzmodell (12) mittels der elektronischen Recheneinrichtung (10); und
   - Bestimmen der Anwendbarkeit der Messeinrichtung (26) in Abhängigkeit von dem vorgegebenen Genauigkeitswert (22) und dem bestimmten Genauigkeitswert (24) mittels der elektronischen Recheneinrichtung (10).

2. Verfahren nach Anspruch 1, **dadurch gekennzeichnet, dass** zumindest ein Parameter (28) für das Maschinensystem (20) vorgegeben wird und das digitale Referenzmodell (12) in Abhängigkeit von dem Parameter (28) zum digitalen Modell (18) adaptiert wird.

3. Verfahren nach Anspruch 1 oder 2, **dadurch gekennzeichnet, dass** zum Bestimmen des Genauigkeitswerts (24) eine Schadensart einer jeweiligen Komponente des Maschinensystems (20) berücksichtigt wird.

4. Verfahren nach einem der vorhergehenden Ansprüche, **dadurch gekennzeichnet, dass** zum Bestimmen des Genauigkeitswerts (24) eine Positionierung der Messeinrichtung (26) relativ zu einer jeweiligen Komponente des Maschinensystems (20) berücksichtigt wird.

5. Verfahren nach Anspruch 4, **dadurch gekennzeichnet, dass** eine Transferfunktion von der Komponente zur Messeinrichtung (26) bestimmt wird.

6. Verfahren nach einem der vorhergehenden Ansprüche, **dadurch gekennzeichnet, dass** eine Peripherie des Maschinensystems (20) beim Bestimmen des Genauigkeitswerts (24) berücksichtigt wird.

7. Verfahren nach einem der vorhergehenden Ansprüche, **dadurch gekennzeichnet, dass** bei einer Bestimmung einer Nicht-Anwendbarkeit der Messeinrichtung (26) eine Warnmeldung erzeugt wird.

8. Verfahren nach einem der vorhergehenden Ansprüche, **dadurch gekennzeichnet, dass** bei einer Bestimmung einer Nicht-Anwendbarkeit der Messeinrichtung (26) eine geeignete Messeinrichtung vorgeschlagen wird.

9. Verfahren nach einem der vorhergehenden Ansprüche, **dadurch gekennzeichnet, dass** bei einer Bestimmung einer Nicht-Anwendbarkeit der Messeinrichtung (26) ein anderes digitales Referenzmodell vorgeschlagen wird.

10. Verfahren nach einem der vorhergehenden Ansprüche, **dadurch gekennzeichnet, dass** das digitale Referenzmodell (12) auf Basis einer Komponentenliste des Maschinensystems (20) vorgegeben wird.

11. Verfahren nach Anspruch 10, **dadurch gekennzeichnet, dass** physikalische Eigenschaften und/oder chemische Eigenschaften und/oder thermische Eigenschaften in der Komponentenliste berücksichtigt werden.

12. Verfahren nach einem der vorhergehenden Ansprüche, **dadurch gekennzeichnet, dass** der einzuhaltende Genauigkeitswert (22) durch Erfassen einer Eingabe einer Person vorgegeben wird.

13. Computerprogrammprodukt mit Programmcodemitteln, welche eine elektronische Recheneinrichtung (10) dazu veranlassen, wenn die Programmcodemittel von der elektronischen Recheneinrichtung (10) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (10) zum Bestimmen einer Anwendbarkeit einer Messeinrichtung (26) für ein Maschinensystem (20), wobei die elektronische Recheneinrichtung (10) zum Durchführen eines Verfahrens nach einem der Ansprüche 1 bis 12 ausgebildet ist.

FIG 1

```
  ┌──────┐         ┌──────────┐         ┌──────┐
  │  22  │ ──────▶ │    10    │ ──────▶ │  24  │
  └──────┘         └──────────┘         └──────┘
                      ▲    ▲
                     ╱     │
                    ╱      │        ┌──┐
                   ╱       │        │  │──26
                  ╱        │        └──┘
            14   ╱         │
             │  ╱    28    │
  12─┐  ┌────┼─┐   ┌─┐  ┌──┴───┐
     │  │  ┌─┴┐│   │ │─▶│  18  │
     └──│  └──┘│   └─┘  └──────┘
        └──────┘
          ▲                  ▲
          │                  │
         16                 20
```

FIG 2

```
  32          ▲
     └─       │
              │   ┬
              │   ●──12
              │   ┴
              │              ┬
              │              ●──20
              │              ┴                    22
              ├ ─ ─ ─ ─ ─ ─ ─ ─ ─ ─ ─ ─ ─ ─│─ ─ ─
              │                      ┬
              │                      ●──30
              │                      ┴
              │
              │
              └──────────────────────────────▶
                                              28
```

Europäisches
Patentamt
European
Patent Office
Office européen
des brevets

# EUROPÄISCHER RECHERCHENBERICHT

Nummer der Anmeldung

EP 24 15 4703

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2009 009448 B4 (VOLKSWAGEN AG [DE]) 4. Februar 2021 (2021-02-04) * Zusammenfassung, Beschr. [0001]-[0028], Figs. 1-3 * | 1-15 | INV. G01D3/08 G01D18/00 G01D21/00 |
| A | US 2014/195184 A1 (MAEDA SHUNJI [JP] ET AL) 10. Juli 2014 (2014-07-10) * Zusammenfassung, Beschr. [0001], [0075]-[0080], Figs. 1-2 * | 1-15 | |
| A | EP 2 922 033 B1 (VOLVO CAR CORP [SE]) 21. November 2018 (2018-11-21) * Zusammenfassung, Beschr. [0001], [0054]-[0066], Fig. 1 * | 1-15 | |

RECHERCHIERTE
SACHGEBIETE (IPC)

G01D

Der vorliegende Recherchenbericht wurde für alle Patentansprüche erstellt

| Recherchenort | Abschlußdatum der Recherche | Prüfer |
|---|---|---|
| München | 8. Juli 2024 | Reim, Klaus |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 15 4703

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-07-2024

| Im Recherchenbericht angeführtes Patentdokument | Datum der Veröffentlichung | Mitglied(er) der Patentfamilie | | Datum der Veröffentlichung |
|---|---|---|---|---|
| DE 102009009448 B4 | 04-02-2021 | KEINE | | |
| US 2014195184 A1 | 10-07-2014 | JP | 5808605 B2 | 10-11-2015 |
| | | JP | 2013041448 A | 28-02-2013 |
| | | US | 2014195184 A1 | 10-07-2014 |
| | | WO | 2013024613 A1 | 21-02-2013 |
| EP 2922033 B1 | 21-11-2018 | CN | 104925001 A | 23-09-2015 |
| | | EP | 2922033 A1 | 23-09-2015 |
| | | US | 2015266490 A1 | 24-09-2015 |

EPO FORM P0461

Für nähere Einzelheiten zu diesem Anhang : siehe Amtsblatt des Europäischen Patentamts, Nr.12/82